# EUROPEAN PATENT APPLICATION

(11) **EP 3 179 336 A1**
(43) Date of publication of application: **14.06.2017**
(21) Application number: 15306946.3
(22) Date of filing: 07.12.2015
(51) Int. Cl.: G06F 3/01, H04N 21/00

(54) **METHOD AND DEVICE FOR RENDERING HAPTIC EFFECTS IN AN IMMERSIVE CONTENT**

(71) Applicant: Thomson Licensing, 92130 Issy-les-Moulineaux (FR)
(72) Inventor: THUDOR, Franck, 35576 Cesson Sevigne Cedex (FR); DANIEAU, Fabien, 35576 Cesson Sevigne Cedex (FR); LEROY, Bertrand, 35576 Cesson Sevigne Cedex (FR)
(74) Representative: Huchet, Anne

(57) **Abstract**

A haptic effect (22) associated with an immersive content (20) is rendered according to the comparison between a first information representative of a location of a source of the haptic effect within the immersive content and a second information representative of a current field of view.

## Description

### 1. Technical field

The present disclosure relates to the domain of haptics. The present disclosure is also understood in the context of haptic effects of any kind, e.g. motion, vibration, rendered by using one or more actuators, associated with immersive audio-visual content.

### 2. Background

To increase the feeling of immersion while watching an audio-visual content, haptics may be combined with the audio-visual content. Such a combination of haptics and audio-visual content is known under the acronym HAV, standing for haptics-audio-visual.

With the arrival of new wide field of view cameras available at capture side and of display devices such as HMD (Head-Mounted Display) or Caves, it is possible to improve the experience of immersion. In such a configuration, i.e. in the context of an immersive audio-visual content, a user can move his/her head and body to explore a 3D scene associated with the immersive audio-visual content (up to a 4pi steradian field of view).

In the context of haptics combined with an immersive audio-visual content, an event associated with a haptic effect may occur in a part of the immersive audio-visual content that does not belong to the current field of view of the user, i.e. in a part that is not currently watched by the user, which may lead to a degraded user experience.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of rendering a haptic effect associated with an immersive content, the method comprising rendering said haptic effect according to a first information representative of a location of a source of the haptic effect within the immersive content and according to a second information representative of a current field of view.

The present disclosure also relates to a device for rendering a haptic effect associated with an immersive content, the device comprising a processor configured to render said haptic effect according to a first information representative of a location of a source of the haptic effect within the immersive content and according to a second information representative of a current field of view.

According to a particular characteristic, the method further comprises (the device further comprises a receiver configured for) receiving the first information with a data stream comprising said immersive content

Advantageously, the method comprises (the at least one processor of the device is configured for) determining the first information by analysing said immersive content.

According to a specific characteristic, the haptic effect is rendered only when the source of the haptic effect is located in the current field of view.

Advantageously, the method further comprises (the at least one processor of the device is configured for) determining a time of the rendering of the haptic effect according to the first information and a third information representative of a speed of displacement of the current field of view.

According to a specific characteristic, when the source of the haptic effect is located outside the current field of view, the haptic effect is rendered with an intensity that is a function of the distance between the source of the haptic effect and a reference direction associated with the current field of view.

The present disclosure also relates to a signal carrying at least a packet comprising data representative of a haptic effect, the haptic affect being associated with an immersive content, the signal further carrying a first information representative of a location of a source of the haptic effect within the immersive content and a second information representative of a current field of view.

The present disclosure also relates to a computer program product comprising program code instructions to execute the steps of the method of rendering a haptic effect, when this program is executed on a computer.

The present disclosure also relates to a (non-transitory) processor readable medium having stored therein instructions for causing a processor to perform at least the abovementioned method of rendering a haptic effect.

### 4. List of figures

The present principles will be better understood, and other specific features and advantages will emerge upon reading the following description, the description making reference to the annexed drawings wherein:
- figures 1 A and 1 B show an immersive audio-visual content and associated haptic effect, according to a particular embodiment of the present principles;
- figure 2 shows a system configured to render the haptic effect of figure 1 A, according to a first example of the present principles;
- figure 3 shows a system configured to render the haptic effect of figure 1 A, according to a second example of the present principles;
- figures 4A to 4C show the rendering of the haptic effect of figure 1 A when a user is moving with regard to the immersive content of figure 1A, according to an example of the present principles;
- figure 5 shows an example of an architecture of a device configured for rendering the haptic effect of figure 1 A, in accordance with an example of the present principles;
- figure 6 shows the syntax of a signal carrying a description of the haptic effect of figure 1 A, in accordance with an example of the present principles;
- figure 7 shows a method of rendering the haptic effect of figure 1A, according to a particular example of the present principles.

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present principles will be described in reference to a particular embodiment of a method of rendering a haptic effect associated with an immersive content. The source of the haptic effect is within the immersive content. The rendering of the haptic effect is determined by the result of a comparison between a first information representative of the location of the source of the haptic effect in the immersive content and a second information representative of a current field of view, i.e. of the part of the immersive content currently displayed on one or more screens.

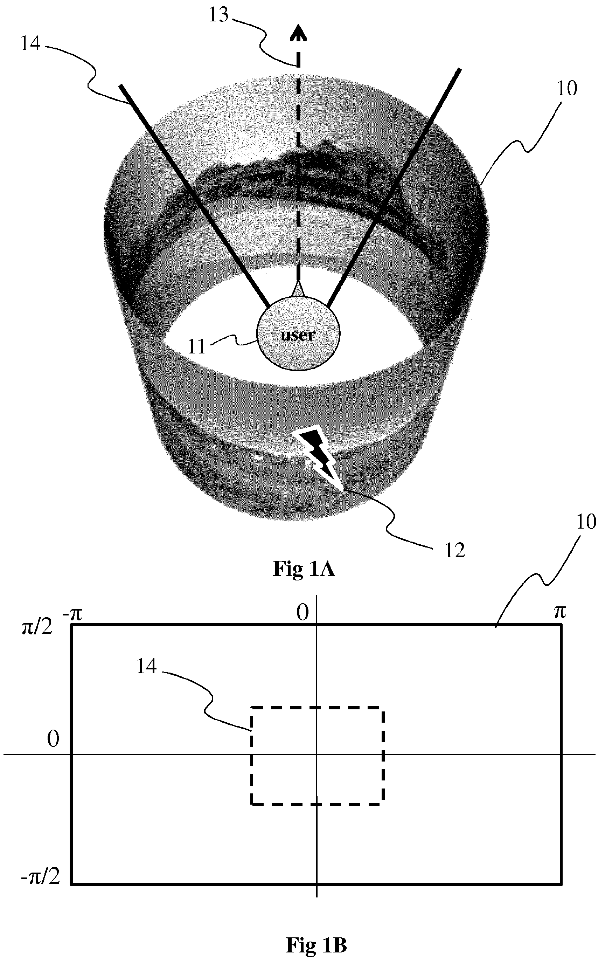

**Figures 1A and 1B** show a user 11 immersed in a 4π steradian video content 10 (or spherical video content), also called immersive content 10, according to an example embodiment of the present principles. Figure 1 A corresponds to a 3D representation of the immersive content. Figure 1 B corresponds to a planar representation of the immersive content 10. The immersive content 10 corresponds for example to a real scene acquired with one or more cameras or to a virtual scene synthesized by using a 3D engine. According to a variant, the immersive content 10 corresponds to a representation of a real scene including virtual object(s), i.e. a blending of real and virtual scenes. As illustrated in figure 1 A, the user 11 is watching at a part of the immersive content according to a viewing direction 13, the viewing direction 13 corresponding to the main direction of the gaze of the user 11. A body model may be associated with the user. A field of view 14 is associated with the viewing direction 13, the field of view 14 corresponding to a part only of the immersive content 10. When the gaze direction of the user 11 changes, the part of the immersive content seen by the user (and corresponding to the field of view) changes consequently. The user 11 may wander its gaze within the immersive content by for example moving his/her head (or his/her body or a part of it) from left to right (or inversely) and/or from top to bottom (or inversely). One or more haptic effect(s) 12 is (are) associated with the immersive content. In the example of Figure 1A, the source of the haptic effect 12 is located in the back of the user with respect to the viewing direction 13. The haptic effect may be of any kind, for example a heat source, a vibration source.

Naturally, the location of the source of the haptic effect is not limited to the example of figure 1 A. The source of the haptic effect may be located at any point of the immersive content 10.

A first information representative of the location of the source of the haptic effect within the immersive content is advantageously associated with the immersive content. The first information corresponds for example to the coordinates of the source of the haptic effect 12, for example angular coordinates (θ,φ), wherein θ is the azimuth angle and φ the elevation angle with respect to an absolute coordinate reference. θ may be comprised between -π and π, and φ may be comprised between - π/2 and π/2. According to another example, the coordinates of the source are Cartesian coordinates (x,y) expressed in a Cartesian space (*0*,*̅i̅*̅,*̅j̅*̅) associated with the planar representation of the immersive content. According to an optional variant, the first information is associated with a timestamp, i.e. the time at which the haptic effect is to be rendered, for example when the immersive content is a video, the timeline with respect to which is expressed the timestamp being for example the timeline of the immersive content.

The haptic effect is generated on the user by the way of one or more actuators associated with the user, for example worn by the user (such as vibrating actuators such as for example a watch), or in contact with part(s) of the body of the user (for example actuators moving the part of the body with which they are in contact), or remote from the user (for example a heat source).

The immersive system used to visualize the immersive content is for example a HMD (Head-Mounted Display), worn on the head of the user or as part of a helmet. The HMD comprises one or more display screens (for example LCD (Liquid Crystal Display), OLED (Organic Light-Emitting Diode) or LCOS (Liquid Crystal On Silicon)) and sensor(s) configured for measuring the change(s) of position of the HMD, for example gyroscopes or an IMU (Inertial Measurement Unit), according to one, two or three axes of the real world (pitch, yaw and/or roll axis). The part of the immersive content 10 corresponding to the measured position of the HMD may be determined with a specific function establishing the relationship between the point of view associated with the HMD in the real world and the point of view of a virtual camera associated with the immersive content 10. Controlling the parts of the immersive content to be displayed on the display screen(s) of the HMD according to the measured position of the HMD enables a user wearing the HMD to browse into the immersive content, which is larger than the field of view associated with the display screen(s) of the HMD. For example, if the field of view offered by the HMD is equal to 110°(for ex ample about the yaw axis) and if the immersive content offers a content of 180°, the user wearing the HMD may rotate his/her head to the right or to the left to see the parts of the video content outside the field of view offered by the HMD. According to another example, the immersive system is a CAVE (Cave Automatic Virtual Environment) system, wherein the immersive content is projected onto the walls of a room. The walls of the CAVE are for example made up of rear-projection screens or flat panel displays. The user may thus browse his/her gaze on the different walls of the room. The CAVE system is advantageously provided with cameras acquiring images of the user to determine by video processing of these images the gaze direction of the user. According to a variant, the gaze or the pose of the user is determined with a tracking system, for example an infrared tracking system, the user wearing infrared sensors.

Naturally, the immersive content 10 is not limited to a 4π steradian video content but extends to any video content (or audio-visual content) having a size greater than the field of view 14. The immersive content may be for example a 2π, 2.5 π, 3π steradian content and so on.

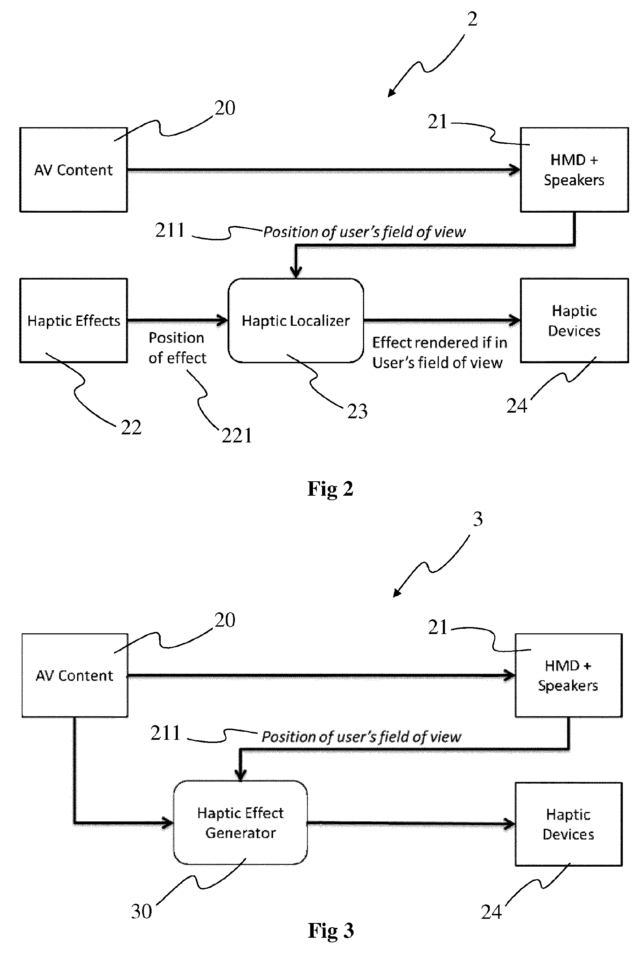

**Figure 2** shows a system 2 configured to render the haptic effect 12, according to an example embodiment of the present principles. The system 2 comprises an immersive display system 21 used to visualize an immersive content 20, a module 23 configured to compare the location of the source of one or more haptic effects 22 with a current field of view associated with the immersive display system 21 and one or more haptic devices 24, e.g. haptic actuators. The immersive display system corresponds for example to a HMD (with or without speakers) or to a CAVE system. The module 23 is for example a software module or a hardware module that is embedded in the immersive display system 21 (the module 23 and the immersive display system forming one single device). According to a variant, the module 23 is embedded in the haptic device(s) 24, thus forming one single device. According to another variant, the module 23 is remote from the immersive display system 21 and remote from the haptic devices 24, the module 23, the immersive display system 21 and the haptic devices 24 being connected to each other via wired connection (e.g. via USB or Ethernet) or wireless connection (e.g. via Bluetooth or Wifi).

The immersive content 20 is received by the immersive display system 21 under the form of a video stream with or without an audio stream. The format of the video stream may be for example MPEG-2, H.264 or MPEG-4, and the format of the audio stream may be for example MP3 or AAC (Advance Audio Coding). The description of the haptic effect(s) 22 is received by the module 23 under the form of a haptic stream that comprises one or more haptic packets, a haptic packet being a packet comprising data representative of one haptic effect.

A haptic packet comprises for example a set of attributes and payload data. The set of attributes comprises for example the first information representative of the location of the source of the haptic effect 22. According to an optional variant, the set of attributes further comprises an information representative of the time of rendering of the haptic effect 22 in the timeline of the immersive content 20. According to a variant, the time of rendering of the haptic effect is expressed in an absolute time reference.

According to an optional variant, the set of attributes may also comprise the identification, called HID, of a haptic body model associated with the type of the haptic effect to be rendered on the user. Indeed, a different (haptic) body model may be advantageously defined for each type of haptic effect to be rendered, for example a (haptic) body model for temperature effect, with for example HID #0, a (haptic) body model for vibratory effect, with for example HID #1, a (haptic) body model for pressure effect, with for example HID #2, a (haptic) body model for movement effect, with for example HID #3, etc. Data used to define the set of body models are for example stored on a server that may be accessed by the device used to create the haptic effect but also by the devices used to render the haptic effect, on the end-user side. According to a variant, the data used to define the set of a body model are stored locally on each device used to create and render the haptic effect. Parts of the data used to define the haptic body models may depend on the type of body model used for the haptic body models. For example, a body model may be defined with a skeleton including elements such as joints and segments and/or with mesh elements for the skin. Each element may be described and identified with an element ID for each haptic body model. The mesh used to define the skin may also be different from one haptic body model to another one depending on which haptic effect is associated with. For example, the mesh resolution of the hands of the haptic body model #0 may be higher than the mesh resolution of the hands of the haptic body model #1. Other data used to define each haptic body model may be also associated with each haptic body model, such as a range listing the admissible values for the type of haptic effect it is associated with (for example min/max values, e.g. -20°/100°C for the temperature effect). Using HID in the haptic packet enables a reduction in the amount of data to be transmitted as it avoids transmitting the data used to define the haptic body model the haptic packet referred to, thus reducing the burden of bandwidth.

Payload data of the haptic packet may comprise a data array (also called "frame") of size S that may be for example a fixed value. The data array comprises the effective haptic values to transfer. Each frame contains a burst of complete haptic samples (one haptic packet may contain several successive full haptic samples sampled at a frequency that may be set in the attributes for example, in addition to the first and third information, or that may be set in the data associated with the haptic body model).

Each haptic sample comprises an information representative of the part(s) of the body model targeted by the haptic effect, called first part(s). Said information corresponds for example to the number 'N' of first parts of the body model associated with the haptic packet that should be affected by this haptic effect. Said information may also comprise identifiers (F) identifying each first part of the body model targeted by the haptic effect, i.e. each element of the body model impacted or feeling the effect of the haptic effect, the identifiers 'F' making reference to the elements described in the data used to define each haptic body model. Each haptic sample may further comprise a list of haptic effect values 'V' (intensities) associated with the N first parts, each value may be scalar or vectorial (for a vibration, a couple frequency / intensity may be used), each value being for example normalized between 0 and 1 according to a range specified in the associated haptic body model. According to an optional variant, the payload data may comprise an end of packet (EOP) identifier (for example the unsigned integer 0xFFFF) that may be added at the end of the useful data if the full data array is not used.

The video stream, audio stream and haptic stream are for example wrapped in a container, for example a Matroska container (MKV), a 3GP container, an ASF (Advanced Systems Format) container. One skilled in the art can appreciate that the present principles are compatible with other types of formats and containers, including those known currently and those developed in the future.

The module 23 further receives an information 211 representative of a current field of view, called second information 211. The second information may be generated by the immersive display system 21 and corresponds to the part of the immersive content 20 currently (i.e. at a determined time) displayed on one or more screens of the immersive display system 21 and watched by a user. The field of view changes according to the direction in which the user is watching. When the immersive display system corresponds to a HMD, the field of view corresponds to the field of view provided by the screen(s) of the HMD, for example a field of view 100°, 110° or 120°. The part of the immersive content displaye d on the screens at a current time, called current field of view, is for example determined by determining the pose and/or the orientation of the HMD in the real world (i.e. determining the point of view of the HMD in the real world) at the current time and by determining the corresponding point of view of the virtual camera associated with the immersive content 20 at the current time. The pose and/or orientation of the HMD in the real world is obtained from the gyroscopes and/or IMU of the HMD. The point of view of the virtual camera is obtained from the determined point of view of the HMD at a current time and a function establishing the relationship between the space of the real world and the space of the immersive content. The current field of view is obtained from the determined current point of view of the virtual camera and the field of view provided by the screen(s) of the HMD.

When the immersive display system corresponds to a CAVE, the field of view corresponds for example to the field of view provided by the screen or the wall of the CAVE watched by the user. The screen or the wall watched by the user is for example obtained by determining the gaze at a current time. As in the case of a CAVE system the whole immersive content is displayed on the different screens/walls forming the CAVE system, the current field of view corresponds to the part of the immersive content displayed on the screen/wall watched by the user at the current time.

When the point of view of the user using the immersive display system 21 changes, the change of point of view in the real world is determined and the current field of view determined accordingly.

The module 23 compares the first information with the second information to determine if the source of the haptic effect 22 is located within the current field of view. If the source of the haptic effect 22 is located within the current field of view, then the haptic effect is rendered. If the source of the haptic effect 22 is not located within the current field of view, then the haptic effect is not rendered. Rendering the haptic effect means decoding the packet describing the haptic effect to determine the parameters representative of the haptic effect, for example the type of haptic effect, the intensity of the haptic effect, the duration of the haptic effect. Once the parameters representative of the haptic effect have been obtained, they are transmitted to the one or more haptic devices 24, which is/are adapted to generate the haptic effect 22 so that the user feels it. As the rendering and thus the generation of the haptic effect 22 occurs only when the source of the haptic effect is determined as being located within the current field of view, the user is not disturbed by the generation of an haptic effect that would have no relation with the part of the immersive content he/she is currently watching.

**Figure 3** shows a system 3 configured to render the haptic effect 12, according to a further example embodiment of the present principles. The system 3 comprises the immersive display system 21 used to visualize the immersive content 20, a module 30 configured to determine the first information from the immersive content and to compare the first information with the second information, and the one or more haptic devices 24.

The immersive display system 21, the one or more haptic devices 24 and the immersive content 20 have been described with regard to figure 2 and are not further discussed with regard to figure 3. A difference between the system 2 and the system 3 is that the first information is not comprised per se in the haptic stream in the system 3, in contrast to the system 2. In the system 3, the first information representative of the location of the source of the haptic effect within the immersive content needs to be obtained or determined by analysing the immersive content, by the module 30. The module 30 is for example a software module or a hardware module that is integrated in the immersive display system 21 or that is distinct from the immersive display system 21. The first information may be obtained by analysing the video information associated with the immersive content. For example, if pixels representative of an explosion are detected in a part of the video, haptic effect representative of an explosion (heat change and/or pressure change) may be associated with the part of the immersive content comprising said pixels, the first information corresponding to the coordinates of said part. The analysing may for example comprise segmenting the video information to determine objects of the immersive content and clustering the determined objects to determine the type of the objects (for example by applying machine learning techniques). According to the type of the objects, a haptic effect to generate may be associated with the location of the objects in the immersive content. Description of the haptic effect may be obtained for example from a list of different haptic effects, for example a list of haptic effects present in the immersive content and received with the video and/or audio stream comprising the immersive content. According to a variant, the list of haptic effects and their description is stored on a remote server and received by the module 30 under request from the module 30.

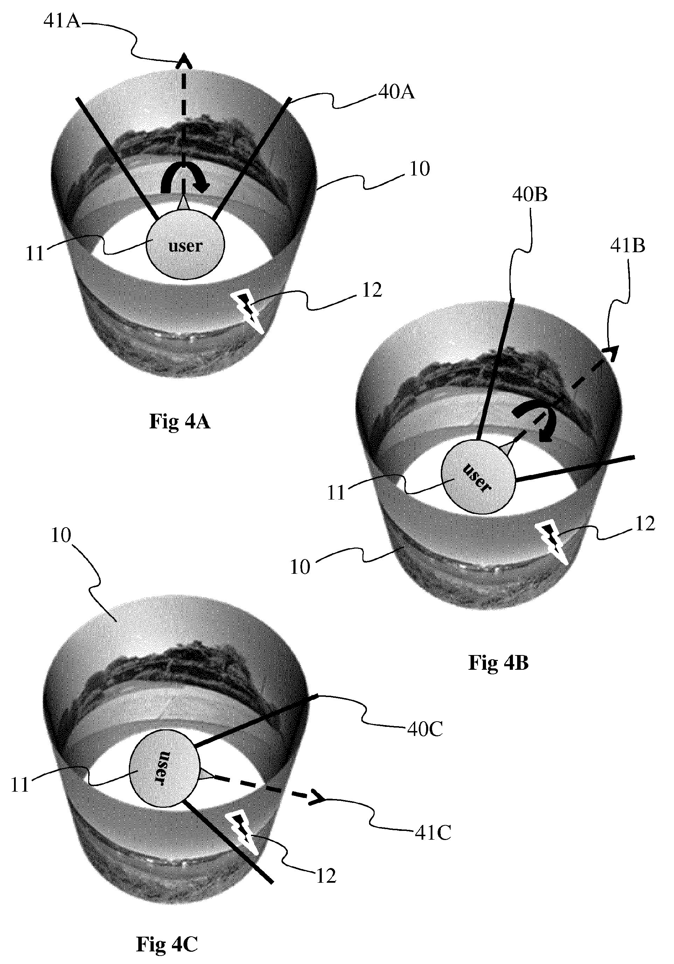

**Figures 4A to 4C** show the process of rendering the haptic effect 12 when the user 11 is moving with regard to the immersive content 10, according to an example of the present principles.

**Figure 4A** shows the user 11 watching a first part of the immersive content 10 according to a first point of view associated with a first field of view 40A at a time t, i.e. the user 11 is watching the immersive content 10 according to a first pose and/or viewing direction. A first viewing direction 41 A is associated with the first field of view 40A. The first viewing direction 41 A may correspond for example to main viewing direction of the user 11 watching the first part of the immersive content 10 corresponding to the first field of view 40A, i.e. to the gaze of the user 11 at the time t. The first viewing direction 41 A corresponds for example to the direction located in the middle of the first field of view 40A. The source of the haptic effect 12 is not located in the first field of view 40A and the haptic effect 12 is consequently nor rendered while the user is watching the first part of the immersive content 10 corresponding to the first field of view 40A, as explained with regard to figures 2 and 3.

**Figure 4B** shows the user 11 watching a second part of the immersive content 10 according to a second point of view associated with a second field of view 40B at a time t+δt1, i.e. the user 11 is watching the immersive content 10 according to a second pose and/or viewing direction. δt1 corresponds to a time interval, for example a few milliseconds, 1 second, 2 seconds or more, the time of watching the second part of the immersive content being after the time of watching the first part of the immersive content, i.e. the time t+δt1 follows the time t. A second viewing direction 41 B is associated with the second field of view 40B. The second viewing direction 41 B may correspond for example to a main viewing direction of the user 11 watching the second part of the immersive content 10 corresponding to the second field of view 40B, i.e. to the gaze of the user 11 at the time t+δt1. The second viewing direction 41 B corresponds for example to the direction located in the middle of the second field of view 40B. The source of the haptic effect 12 is not located in the second field of view 40B and the haptic effect 12 is consequently nor rendered while the user is watching the second part of the immersive content 10 corresponding to the second field of view 40B, as explained with regard to figures 2 and 3.

**Figure 4C** shows the user 11 watching a third part of the immersive content 10 according to a third point of view associated with a third field of view 40C at a time t+δt2, i.e. the user 11 is watching the immersive content 10 according to a third pose and/or viewing direction, δt2 being strictly greater than δt1 (δt2 > δt1). δt2 corresponds to a time interval, for example a few milliseconds, 1 second, 2 seconds or more, the time of watching the third part of the immersive content being after the time of watching the second part of the immersive content 10, i.e. the time t+δt2 follows the time t+δt1. A third viewing direction 41 C is associated with the third field of view 40C. The third viewing direction 41 C may correspond for example to a main viewing direction of the user 11 watching the third part of the immersive content 10 corresponding to the third field of view 40C, i.e. to the gaze of the user 11 at the time t+δt2. The third viewing direction 41 C corresponds for example to the direction located in the middle of the third field of view 40C. The source of the haptic effect 12 is located within the third field of view 40C and the haptic effect 12 is consequently rendered while the user is watching the third part of the immersive content 10 corresponding to the third field of view 40C, as explained with regard to figures 2 and 3.

According to a variant, a speed of displacement, e.g. an angular speed, of the point of view of the user 11 is determined. The speed of displacement is for example determined using the information relative to the different viewing directions 40A, 40B and 40C and associated times t, t+δt1 and t+δt2. According to a variant, the speed of displacement is determined or measured with the gyroscopes and/or IMU of the HMD worn by the user 11. Knowing the location of the source of the haptic effect 12, the motion of the user whose viewing direction gets closer to the haptic effect with the time and the displacement speed of the viewing direction of the user 11, the system 2 or 3, for example the module 23 or 30, may determine a time at which the haptic effect should be rendered. For example, when the user 11 watches the second part of the immersive content 10 according to the second field of view 40B, the system 2 or 3 is able to determine in advance when the source of the haptic effect 12 will be located within the third field of view 40C based on the displacement speed of the viewing direction of the user.

According to another variant, the haptic effect is rendered even if the location of the source of the haptic effect is not within the current field of view. For example, the haptic effect 12 may be rendered while the user is watching at the second part of the immersive content 10 associated with the second field of view 40B. According to this variant, the intensity of the haptic effect may be adapted to the distance between the source of the haptic effect and the second viewing direction 41 B (called reference direction) associated with the second field of view 40B. The intensity is for example lowered, i.e. the greater the distance, the lower the intensity as the haptic effect is not located within the current field of view of the user.

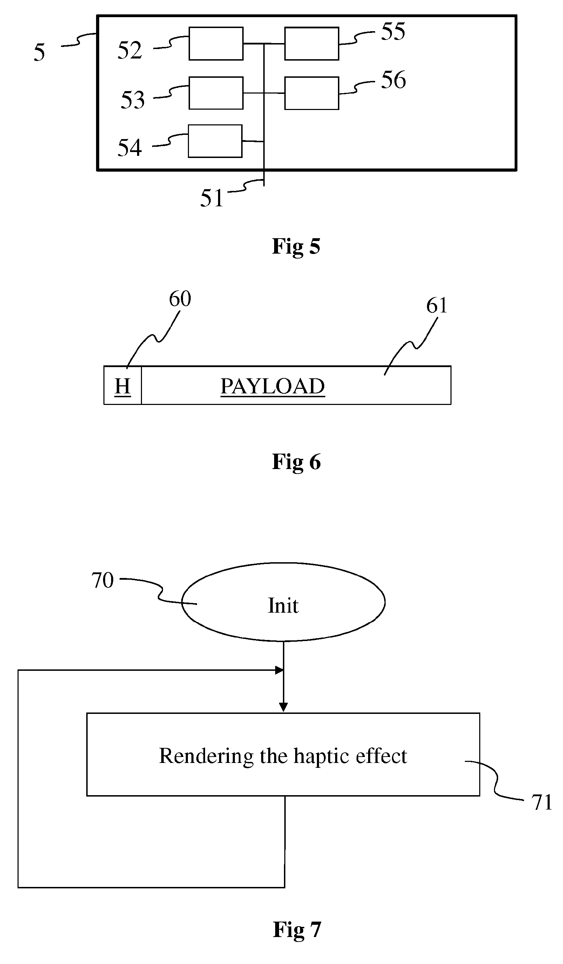

**Figure 5** shows an exemplary architecture of a device 5 which may be configured to implement a method described in relation with figure 7. The device 5 comprises for example to the module 23 of figure 2 or to the module 30 of figure 3.

The device 5 comprises following elements that are linked together by a data and address bus 51:
- a microprocessor 52 (or CPU), which is, for example, a DSP (or Digital Signal Processor);
- a ROM (or Read Only Memory) 53;
- a RAM (or Random Access Memory) 54;
- a storage interface 55;
- an I/O interface 56 (or a receiver) for reception of data to transmit, from an application; and
- a power supply, e.g. a battery, which is not displayed on figure 5.

In accordance with an example, the power supply 57 is external to the device. In each of mentioned memory, the word « register » used in the specification can correspond to area of small capacity (some bits) or to very large area (e.g. a whole program or large amount of received or decoded data). The ROM 53 comprises at least a program and parameters. The ROM 53 may store algorithms and instructions to perform techniques in accordance with present principles. When switched on, the CPU 52 uploads the program in the RAM and executes the corresponding instructions.

The RAM 54 comprises, in a register, the program executed by the CPU 52 and uploaded after switch on of the device 5, input data in a register, intermediate data in different states of the method in a register, and other variables used for the execution of the method in a register.

According to a variant, the device 5 does not comprise any ROM, any program and parameters being stored in the RAM or in another type of memory, e.g. a flash memory.

**Figure 6** shows an example of an embodiment of the syntax of a signal when data (e.g. video, audio and/or haptic data) are transmitted over a packet-based transmission protocol. Each transmitted packet P comprises a header H 60 and a payload PAYLOAD 61. First and second information are for example transmitted in the payload 61. Such a signal is for example received by the module 23 in the example embodiment of figure 2.

**Figure 7** shows a method for rendering a haptic effect that is associated with an immersive content, according to an example embodiment of the present principles.

During an initialisation step 70, the different parameters of the device 5 are updated. In particular, the data representative of the haptic effects to be rendered are initialised in any way.

Then during a step 71, a first information representative of the location of the source of the haptic effect within the immersive content is compared with a second information representative of a current field of view to determine if the haptic effect is to be rendered or not. The current field of view corresponds for example to the part of the immersive content currently displayed on the screen(s) of an immersive display device, i.e. at a determined time t for example.

When the source of the haptic effect is determined as being within the current field of view, the haptic effect is rendered. When the source of the haptic effect is determined as not being located within the current field of view, the haptic effect is not rendered. The rendering of the haptic effect comprises for example the calculating of parameters (e.g. type of haptic effect or type of actuators able to generate the haptic effect, intensity of the haptic effect, duration of the haptic effect, part(s) of a body model impacted by the haptic effect (i.e. part of the body of the user associated with the body model that is targeted by the haptic effect)) representative of the haptic model and transmitting of the parameters to the actuator(s) generating the haptic effect on the user.

According to a variant, the haptic effect may be rendered even when the source of the haptic effect is not located within the current field of view. According to this variant, a distance between a reference direction of the current field of view and the location of the source of the haptic effect in the immersive content is computed. The distance is for example compared with a reference distance (i.e. a determined distance or a threshold distance) and the haptic effect is rendered if/when the computed distance is less than or equal to the reference distance. The haptic effect may be rendered at maximum intensity or with an intensity lower than the maximum intensity. The maximum intensity is for example lowered as a function of the computed distance (i.e. the greater the computed distance the lower the intensity of the haptic effect).

The steps of the method may be reiterated for several haptic effects and/or for several current fields of view.

Naturally, the present disclosure is not limited to the embodiments previously described.

In particular, the present disclosure is not limited to a method for rendering a haptic effect but also extends to any device implementing this method and notably any devices comprising at least one CPU and/or at least one GPU.

The present disclosure also relates to a method of generating a haptic effect (and a device configured for generating a haptic effect) and to a method of transmitting parameters representative of a haptic effect (and a device configured for transmitting parameters representative of a haptic effect).

The present disclosure also relates to a method (and a device configured) for transmitting and/or receiving and/or decoding the packet comprising haptic data.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of rendering a haptic effect (12) associated with an immersive content (10), the method comprising rendering (71) said haptic effect (12) according to a first information representative of a location of a source of the haptic effect (12) within the immersive content (10) and according to a second information representative of a current field of view (40A, 40B, 40C).

2. The method according to claim 1, further comprising receiving said first information with a data stream comprising said immersive content (10).

3. The method according to claim 1, further comprising determining said first information by analysing said immersive content (10).

4. The method according to any one of claims 1 to 3, wherein said haptic effect is rendered only when the source of the haptic effect (12) is located in the current field of view (40C).

5. The method according to any one of claims 1 to 3, further comprising determining a time of the rendering of said haptic effect (12) according to said first information and a third information representative of a speed of displacement of said current field of view (40A, 40B, 40C).

6. The method according to any one of claims 1 to 3, wherein, when the source of the haptic effect (12) is located outside the current field of view 40A, 40B), the haptic effect is rendered with an intensity that is a function of the distance between the source of the haptic effect and a reference direction (41 A, 41 B) associated with the current field of view (40A, 40B).

7. A device (5) for rendering a haptic effect associated with an immersive content, the device comprising a processor (52) configured to render said haptic effect according to a first information representative of a location of a source of the haptic effect within the immersive content and according to a second information representative of a current field of view.

8. The device according to claim 7, further comprising a receiver (56) configured to receive said first information with a data stream comprising said immersive content.

9. The device according to claim 7, wherein said processor is configured to determine said first information by analysing said immersive content.

10. The device according to any one of claims 7 to 9, wherein said haptic effect is rendered only when the source of the haptic effect is located in the current field of view.

11. The device according to any one of claims 7 to 9, wherein said processor is configured to determine a time of the rendering of said haptic effect according to said first representative of the location of the source and a third information representative of a speed of displacement of said current field of view.

12. The device according to any one of claims 7 to 9, wherein said processor is configured to determine an intensity of the haptic effect as a function of the distance between the source of the haptic effect and a reference direction associated with the current field of view, when the source of the haptic effect is located outside the current field.

13. A signal carrying at least a packet comprising data representative of an haptic effect, said haptic affect being associated with an immersive content, **characterized in that** the signal further carries a first information representative of a location of a source of the haptic effect within the immersive content and a second information representative of a current field of view.

14. A computer program product comprising program code instructions to execute the steps of the method according to any one of claims 1 to 6 when this program is executed on a computer.

15. A processor readable medium having stored therein instructions for causing a processor to perform at least the steps of the method according to any one of claims 1 to 6.
